# EUROPÄISCHE PATENTSCHRIFT

(11) **EP 2 640 612 B1**
(45) Veröffentlichungstag und Bekanntmachung des Hinweises auf die Patenterteilung: **13.05.2015**
(21) Anmeldenummer: 11782070.4
(22) Anmeldetag: 11.11.2011
(51) Int. Cl.: B60S 1/38, B60S 1/40

(54) **WISCHBLATTANORDNUNG UND VERBINDUNGSANORDNUNG MIT EINER WISCHBLATTANORDNUNG UND EINEM WISCHARM**
WIPER BLADE ARRANGEMENT AND CONNECTING ARRANGEMENT HAVING A WIPER BLADE ARRANGEMENT AND A WIPER ARM
ENSEMBLE BALAI D'ESSUIE-GLACE ET SYSTÈME DE RACCORDEMENT PRÉSENTANT UN ENSEMBLE BALAI D'ESSUIE-GLACE ET UN BRAS D'ESSUIE-GLACE

(30) Priorität: 16.11.2010 DE 102010052314
(43) Veröffentlichungstag der Anmeldung: 25.09.2013
(73) Patentinhaber: Daimler AG, 70327 Stuttgart (DE)
(72) Erfinder: SCHMID, Heiko, 71739 Oberriexingen (DE)
(74) Vertreter: JENSEN & SON
(86) Internationale Anmeldenummer: PCT/EP2011/005664
(87) Internationale Veröffentlichungsnummer: WO 2012/065700

(56) Entgegenhaltungen:
- WO-A1-2010/006776
- WO-A1-2010/034447
- DE-A1-102007 062 304
- DE-A1-102008 021 457
- DE-A1-102008 049 269

## Beschreibung

Die Erfindung betrifft eine Wischblattanordnung mit einem ein Wischblatt haltenden Anbindungselement, welches an einem Wischarm einer Scheibenwischanlage eines Fahrzeugs festlegbar ist. Über das Anbindungselement ist das Wischblatt mit wenigstens einem Kanal für Waschflüssigkeit koppelbar, welche vom Wischarm her in das Anbindungselement einbringbar ist. Hierbei lässt das Anbindungselement eine Relativbewegung des Wischblatts gegenüber dem Wischarm zu. Des Weiteren betrifft die Erfindung eine Verbindungsanordnung, welche eine solche Wischblattanordnung und einen Wischarm einer Scheibenwischanlage eines Fahrzeugs umfasst.

Die DE 10 2008 021 457 A1 beschreibt ein Wischblatt, welches mittels eines zweiteiligen Adapters an einem Wischarm einer Scheibenwischanlage festlegbar ist. Wischarmseitig sind zwei Anschlussleitungen vorgesehen, welche mit zwei an einem Adapteroberteil angeordneten Kanälen verbunden werden, wenn der Adapter zusammen mit dem Wischblatt von vorne, also in Längsstreckungsrichtung des Wischarms, in einen Endbereich des Wischarms eingeführt wird. Das Adapteroberteil ist auf einem ein Adapterunterteil durchgreifenden Gelenkbolzen gelenkig gelagert. An dem Adapterunterteil, welches eine Federschiene des Wischblatts reiterartig übergreift, sind ebenfalls zwei Kanäle für Waschflüssigkeit ausgebildet, über welche entlang des Wischblatt verlaufende Leitungen mit der Waschflüssigkeit beaufschlagbar sind. Jeweilige Anschlussstutzen der am Adapteroberteil und am Adapterunterteil befestigten Kanäle sind über als Wellschläuche ausgebildete Leitungsstücke miteinander verbunden. Die Leitungsstücke, welche außen entlang jeweiliger Stirnseiten des Adapteroberteils und des Adapterunterteils an diesen Teilen vorbeigeführt sind, bestehen aus einem hochflexiblen Kunststoff, etwa aus einem thermoplastischen Elastomer. Aufgrund dieser einen Längenausgleich ermöglichenden Leitungsstücke kann das Adapterunterteil gegenüber dem an dem Wischarm festgelegten Adapteroberteil eine Relativbewegung durchführen, ohne dass diese Relativbewegung durch die starren Kanäle behindert ist.

Die WO 2006/016 006 A1 beschreibt eine Vorrichtung zum gelenkigen Verbinden eines Wischblatts mit einem Wischarm, bei welcher ein Adapter nach unten auf ein Anschlusselement gedrückt wird, welches Federschienen eines Wischblatts hält. Beim Anbringen des Adapters an einem Verbindungselement des Wischarms verrasten Rastvorsprünge an Stegen, welche an Schenkeln des im Querschnitt ein U-Profil aufweisenden Verbindungselements angeordnet sind.

Die DE 691 01 340 T2 beschreibt eine Gelenkverbindung zwischen einem Wischarm und einem Wischblatt. In dem Wischarm, welcher im Querschnitt ein U-Profil aufweist, ist eine Öffnung zur Aufnahme eines Riegels vorgesehen, welcher entlang des Wischarms verschiebbar ist. Wenn der Riegel vom freien Ende des Wischarms weg, also nach hinten geschoben wird, so gibt eine an dem Riegel vorgesehene Aufnahme eine Gelenkachse frei, welche zwei Längswände eines Futters miteinander verbindet. Das Futter ist hierbei in eine Öffnung eingeschoben, welche in einem Hauptbügel des Wischblatts ausgebildet ist, wobei an dem Futter ausgebildete Klammern in am Hauptbügel vorgesehene Aussparungen einrasten.

Die DE 10 2008 049 269 A1 und die WO 2010/034 445 A1, welche die Priorität der DE 10 2008 049 269 A1 beansprucht, beschreiben ebenfalls eine Verbindung eines Wischblatts mit einem Wischarm über einen Adapter, welcher das Wischblatt mit Leitungen für Waschflüssigkeit koppelt, die vom Wischarm her kommend in das Wischblatt geleitet wird. Auch hier wird der Adapter zusammen mit dem Wischblatt in Längserstreckungsrichtung des Wischarms an diesen montiert. Ein Adapteroberteil ist mit einem Adapterunterteil über einen Gelenkbolzen gelenkig verbunden, welcher durch das Adapterunterteil hindurchgeführt ist. An einer Stirnseite des Adapteroberteils sind zwei Schlauchstücke angeordnet, welche die Waschflüssigkeit aus den im Adapteroberteil in Längserstreckungsrichtung des Wischarms verlaufenden Leitungen aufnimmt. Die beiden Schlauchstücke führen die Waschflüssigkeit zwei in Längserstreckungsrichtung des Wischblatts verlaufenden Leitungen zu. Die nach unten hin abgebogenen Schlauchstücke weisen eine Schlinge auf, aufgrund welcher sie einer Bewegung des Wischblatts relativ zu dem Wischarm folgen können, ohne dass auf die Leitungen ein Zug ausgeübt wird. Die Schlauchstücke sind zudem aus einem hochelastischen Material gebildet, sodass trotz der am Adapter angeordneten Leitungen keine Behinderung der Schwenkbewegung des Adapterunterteils gegenüber dem Adapteroberteil erfolgt.

Als nachteilig ist hierbei der Umstand anzusehen, dass die Leitungen für die Waschflüssigkeit vergleichsweise anfällig für Beschädigungen sind. Zudem ist das Anbringen des Adapters zusammen mit dem Wischblatt an dem Wischarm für eine Bedienperson vergleichsweise mühselig

WO-2010/006776-A offenbart eine Wischblattanordnung gemäß das erste Teil des Anspruchs 1.

Aufgabe der vorliegenden Erfindung ist es daher, eine besonders robuste Wischblattanordnung der eingangs genannten Art zu schaffen sowie eine Verbindungsanordnung mit einer solchen Wischblattanordnung und einem Wischarm, welche besonders einfach in der Handhabung ist.

Diese Aufgabe wird durch eine Wischblattanordnung mit den Merkmalen des Patentanspruchs 1 und durch eine Verbindungsanordnung mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

Die erfindungsgemäße Wischblattanordnung umfasst ein Anbindungselement, welches ein Wischblatt hält. Das Anbindungselement ist an einem Wischarm einer Scheibenwischanlage eines Fahrzeugs festlegbar. Über das Anbindungselement ist das Wischblatt mit wenigstens einem Kanal für Waschflüssigkeit koppelbar, welche vom Wischarm her in das Anbindungselement einbringbar ist. Das Anbindungselement ist hierbei derart ausgebildet, dass eine Relativbewegung des Wischblatts gegenüber dem Wischarm durch das Anbindungselement ermöglicht ist. Hierfür weist das Anbindungselement einen zum Halten einer Federschiene des Wischblatts ausgebildeten Reiter auf, welcher ein wischarmseitiges Oberteil und ein wischblattseitiges Unterteil umfasst, welche über ein wenigstens eine Leitung für die Waschflüssigkeit umschließendes Mittelteil des Reiters miteinander verbunden sind, wobei das Mittelteil eine größere Elastizität aufweist als das Oberteil und das Unterteil des Reiters.

Durch das eine große Elastizität aufweisende, biegsame Mittelteil kann sich das Unterteil gegenüber dem Oberteil bewegen und entsprechend kann sich das Wischblatt beim Wischen der in der Regel sphärisch gekrümmten Scheibe dem Verlauf der Scheibenoberfläche anpassen. Dadurch, dass das Mittelteil die wenigstens eine Leitung umschließt, welche mit dem wischarmseitigen Kanal für die Waschflüssigkeit koppelbar ist, ist ein besonders guter Schutz der wenigstens einen Leitung gegeben. Es ist so eine besonders robuste Wischblattanordnung geschaffen. Der wenigstens eine wischblattseitige Kanal für die Waschflüssigkeit, welcher starr im Bereich des Wischarms montiert ist, ist durch das Vorsehen des das Oberteil auf Abstand zu dem Unterteil haltenden Mittelteils von den Schwenkbewegungen des Wischblatts entkoppelt. Das flexible, eine größere Elastizität als das Oberteil und das Unterteil aufweisende Mittelteil nimmt somit die Relativbewegung zwischen Wischarm und Wischblatt nach Art eines das Oberteil mit dem Unterteil verbindenden Scharniers auf.

Dadurch, dass das verschleißanfällige Mittelteil, welches die Relativbewegung zwischen Wischarm und Wischblatt zulässt, Teil des Anbindungselements ist, wird dieses beim Austauschen des Wischblatts zusammen mit dem Anbindungselement ebenfalls ausgetauscht. So kann sichergestellt werden, dass die Relativbewegung zwischen Wischblatt und Wischarm leichgängig bleibt.

In einer vorteilhaften Ausgestaltung der Erfindung ist das Anbindungselement über ein Rahmenelement an dem Wischarm festlegbar, welches mit zumindest zwei einander gegenüberliegenden Außenseiten des Oberteils in Anlage ist. Ein solches Rahmenelement ermöglicht eine besonders gute Übertragung von beim Bewegen des Wischarms auf das Wischblatt zu übertragenden Kräften. Wenn das Rahmenelement das Oberteil außenumfangsseitig vollständig umschließt, ist eine besonders sichere Halterung des Oberteils an dem Rahmenelement und somit eine besonders gute Krafteinleitung von dem Wischarm in das Anbindungselement gegeben.

Hierbei hat es sich als vorteilhaft gezeigt, wenn das Rahmenelement auf einer an dem Unterteil ausgebildeten Drehachse gelagert ist. Dadurch kann das Rahmenelement vom starren Oberteil in das starre Unterteil Kräfte einleiten, ohne dass diese Kräfte über das elastische Mittelteil übertragen zu werden brauchen. Entsprechend kann das Mittelteil eine besonders große Elastizität aufweisen, da die kraftübertragende Verbindung des Oberteils mit dem Unterteil durch das Rahmenelement bewerkstelligt wird.

Bevorzugt ist das Anbindungselement an den Wischarm in eine Montagerichtung montierbar, welche quer zu einer durch die Wischbewegung des Wischblatts definierbaren Wischfläche verläuft. Eine solche Montage des Anbindungselements an den Wischarm ist von einer Bedienperson besonders einfach durchführbar und intuitiv besonders gut erfassbar. Dadurch ist eine besonders große Sicherheit gegen eine Fehlmontage gegeben. Zugleich kann die Übergabe von Waschflüssigkeit aus dem wischarmseitigen Kanal in das Anbindungselement und von dort weiter in das Wischblatt über das Anbindungselement erfolgen, sobald dieses in der Montagerichtung an dem Wischarm festgelegt ist.

Da bei sich auf der Schreibe des Fahrzeugs befindendem Wischblatt auf den Wischarm ein Anpressdruck wirkt, welche das Wischblatt gegen die Scheibe drückt, ist das in die Montagerichtung senkrecht zu der Wischfläche an den Wischarm montierbare Anbindungselement und mit diesem das Wischblatt mittels des Wischarms sicher über die Scheibe bewegbar, sobald der Wischarm das Anbindungselement in die Montagerichtung mit dem Anpressdruck beaufschlagt.

Um eine besonders sichere Fixierung des Anbindungselements an dem Wischarm zu erreichen, kann es gemäß einer weiteren vorteilhaften Ausgestaltung der Erfindung vorgesehen sein, dass das Anbindungselement wenigstens einen über eine Seitenwand desselben vorstehenden Vorsprung aufweist, welcher beim Montieren an den Wischarm in eine in die Montagerichtung offene Ausnehmung am Wischarm einbringbar ist.

Zusätzlich oder alternativ kann das Anbindungselement wenigstens ein Führungselement aufweisen, welches beim Montieren an den Wischarm an einem wischarmseitigen Führungselement geführt ist. Dies erleichtert die Montage des Anbindungselements an den Wischarm. Ein besonders einfaches Montieren des Anbindungselements an den Wischarm oder ein Demontieren des Anbindungselements von demselben ist erreichbar, wenn die Führungselemente eine Einführschräge aufweisen.

Derartige, insbesondere Einführschrägen aufweisende, Führungselemente können an beiden Seitenwänden des Anbindungselements vorgesehen sein. Alternativ kann das Anbindungselement an nur einer Seitenwand ein Führungselement aufweisen, welches mit der wischarmseitigen Führung korrespondiert, sodass ein Vertauschschutz gegeben ist. Dann kann nämlich das Anbindungselement nur an den zugehörigen Wischarm montiert werden, etwa ein beifahrerseitiges Wischblatt an einen beifahrerseitigen Wischarm und ein fahrerseitiges Wischblatt an einen fahrerseitigen Wischarm. Fehlt nämlich an dem Wischarm die mit dem wischblattseitigen Führungselement korrespondierende wischarmseitige Führung, so verhindert der Wischarm das Anbringen des Anbindungselements an demselben, und die Bedienperson wird bemerkt den Versuch, das Wischblatt am nicht dafür vorgesehenen Wischarm zu montieren.

Als weiter vorteilhaft hat es sich gezeigt, wenn das Anbindungselement wenigstens einen elektrischen Steckverbinder aufweist, welcher beim Anbringen des Anbindungselements an den Wischarm mit einem wischarmseitigen elektrischen Anschluss verbindbar ist. Auf diese Weise kann beim Anbringen des Anbindungselements sowohl die Kopplung mit dem Waschflüssigkeit führenden Kanal als auch die elektrische Verbindung sichergestellt werden. Der elektrische Steckverbinder sorgt auch dafür, dass das Anbindungselement beheizt werden kann, sodass durch Einbringen von Heizwärme in das Anbindungselement die Elastizität des Mittelteils auch bei niedrigen Außentemperaturen sichergestellt werden kann.

Bevorzugt ist zudem der elektrische Steckverbinder des Anbindungselements mit einem wischblattseitigen elektrischen Heizleiter gekoppelt, sodass auch das Wischblatt mit Heizenergie beaufschlagt werden kann. Dies ist günstig, um ein Festfrieren des Wischblatts an der Scheibe des Fahrzeugs zu verhindern. Darüber hinaus kann die über das Wischblatt auf die Scheibe aufgebrachte Waschflüssigkeit beheizt werden. Dadurch kann ein Enteisen der Scheibe vorgenommen werden. Zudem kann auch bei niedrigen Temperaturen ein Austreten von Waschflüssigkeit aus dem Wischblatt sichergestellt werden.

Die erfindungsgemäße Verbindungsanordnung umfasst eine verbindungsgemäße Wischblattanordnung und einen Wischarm einer Scheibenwischanlage eines Fahrzeugs. Hierbei ist zum lagegesicherten Halten des Anbindungselements an dem Wischarm ein an dem Wischarm angeordneter Schieber vorgesehen, welcher entlang des Wischarms aus einer Montagestellung in eine das Anbindungselement sichernde Funktionsstellung verschiebbar ist. In der Montagestellung ist hingegen das Anbindungselement von dem Wischarm lösbar. Eine solche Verbindungsanordnung ist besonders einfach in der Handhabung, da zum Montieren des Anbindungselements an den Wischarm nicht das Anbindungselement zusammen mit dem Wischblatt aus der Montagestellung in die Funktionsstellung verschoben zu werden braucht. Vielmehr verbleibt das Anbindungselement in seiner Montagestellung und nur der Schieber wird entlang des Wischarms verschoben, um das Anbindungselement gegen ein Sich-Lösen von dem Wischarm zu sichern. Dies erleichtert die Handhabung der Wischblattanordnung beim Montieren an den Wischarm oder beim Demontieren von dem Wischarm bedeutend.

Bevorzugt ist an dem Wischarm wenigstens eine Anzeige vorgesehen, mittels welcher ein Verbrachtsein des Schiebers in die Funktionsstellung und/oder in die Montagestellung einer Bedienperson anzeigbar ist. Dadurch kann von der Bedienperson besonders einfach festgestellt werden, ob sich der Schieber in der Funktionsstellung befindet, in welcher er das Anbindungselement sichert, oder nicht. Die Anzeige kann als Symbol auf und/oder als Durchtrittsöffnung in dem Wischarm ausgebildet sein, welches beziehungsweise welche beim Verschieben des Schiebers überdeckt beziehungsweise freigegeben wird. Ergänzend oder alternativ kann auch ein Schriftzug vorgesehen sein, welcher auf das vorzunehmende Verschieben des Schiebers in die Funktionsstellung oder Schließstellung hinweist, wenn sich der Schieber noch in der Montagestellung befindet.

Von Vorteil ist es weiterhin, wenn der Wischarm wenigstens eine Rastkerbe aufweist, welche in der Funktionsstellung und/oder in der Montagestellung des Schiebers mit einer an dem Schieber angeordneten Rastnase in Eingriff ist. Das Einrasten der Rastnase in der Rastkerbe ist nämlich sowohl optisch wahrnehmbar als auch hörbar und spürbar. Auf diese Weise kann der Bedienperson eine Rückmeldung übermittelt werden, dass sich der Schieber in der Funktionsstellung beziehungsweise in der Montagestellung befindet. Besonders günstig ist es, wenn ein und dieselbe Rastnase in der Funktionsstellung mit einer ersten Rastkerbe und in der Montagestellung mit einer zweiten Rastkerbe in Eingriff ist. Alternativ kann jedoch auch lediglich eine Rastkerbe vorgesehen sein, welche einer der beiden Stellungen zugeordnet ist. Auch können der Wischarm die Rastnase und der Schieber die Rastkerben aufweisen.

Als weiter vorteilhaft hat es sich gezeigt, wenn der Schieber einen Rücken und zwei Schenkel aufweist, wobei an den Schenkeln des Schiebers wenigstens ein den Wischarm unterseitig umgreifender und/oder das Anbindungselement in der Funktionsstellung des Schiebers sichernder Vorsprung angeordnet ist. Wenn Vorsprünge den Wischarm unterseitig umgreifen, ist durch den Schieber ein Aufschlagschutz bereitgestellt, wenn der Wischarm ohne an diesen montiertes Wischblatt auf die Scheibe aufschlägt, etwa aufgrund einer Unachtsamkeit der Bedienperson nach dem Demontieren des Wischblatts vom Wischarm. Ein solcher Aufschlagschutz ist insbesondere dann besonders wirkungsvoll, wenn der Wischarm aus einem Metall gebildet ist und der Schieber aus einem nachgiebigeren Material, etwa aus Kunststoff. Zudem ist durch den Schieber, welcher den Wischarm unterseitig umgreift, eine besonders gute Führung des Schiebers entlang des Wischarms gewährleistet.

Die Vorsprünge an den Schenkeln des Schiebers können das Anbindungselement in der Funktionsstellung des Schiebers sichern, indem an dem Anbindungselement vorgesehene Vorsprünge, etwa Riegelwarzen, in der Funktionsstellung des Schiebers auf den Vorsprüngen ruhen, welche von den Schenkeln des Schiebers abstehen.

In einer weiteren vorteilhaften Ausgestaltung der Erfindung umfasst die Verbindungsanordnung ein Anschlusselement, welches den wenigstens einen wischarmseitigen Kanal für die Waschflüssigkeit umfasst, und welches mit dem Wischarm verrastbar ist. Auf diese Weise kann sichergestellt werden, dass das Anschlusselement auch nach einem Entfernen des Anbindungselements vom Wischarm sicher an dem Wischarm gehalten ist.

Bevorzugt ist durch das Anschlusselement zugleich ein wischarmseitiger elektrischer Anschluss bereitgestellt. Dann kann über das Anschlusselement sowohl die Versorgung des Wischblatts mit Waschflüssigkeit als auch mit elektrischer Energie zum Beheizen des Wischblatts und/oder der Waschflüssigkeit vorgenommen werden.

Von Vorteil ist es hierbei, wenn der Schieber durch ein Verschieben in die Funktionsstellung mit dem Anschlusselement verrastbar ist. Dann sorgt nämlich der Schieber in seiner Funktionsstellung auch für ein Fixieren des Anschlusselements.

An dem Anschlusselement kann wenigstens ein elektrischer Heizleiter angeordnet sein, mittels welchem die Waschflüssigkeit im Bereich des Wischarms beheizbar ist. Dadurch kann die Waschflüssigkeit bereits auf ihrem Weg entlang des Wischarms beheizt werden, also bevor sie das Anbindungselement erreicht.

Wenn das Anschlusselement einen wischarmseitigen elektrischen Anschluss für in dem Wischblatt verlegte elektrische Heizleiter umfasst, kann sowohl auf dem Weg zum Anbindungselement als auch vom Anbindungselement hin zu wischblattseitigen Auslässen die Waschflüssigkeit beheizt werden.

Schließlich hat es ja vorteilhaft gezeigt, wenn der Schieber und/oder der Wischarm eine Aussparung aufweisen, welche bei einer Bewegung des Wischblatts relativ zu dem Wischarm zum Aufnehmen einer Komponente des Wischblatts ausgebildet ist. So können der Schieber und der Wischarm auf in optischer und in akustischer Hinsicht vorteilhafte Art und Weise besonders weitgehend geschlossen sein, und dennoch ist durch die Aussparungen die Relativbewegung des Wischblatts gegenüber dem Wischarm ermöglicht.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: ein an einem Wischarm einer Scheibenwischanlage eines Fahrzeugs mittels eines Adapters beweglich gehaltenes wasserführendes Wischblatt;
- Fig. 2: den Adapter mit einem Führungsrahmen, welcher Kräfte von einem Oberteil des Adapters auf ein Unterteil desselben überträgt;
- Fig. 3: den Adapter in einer Explosionsdarstellung, welche den Führungsrahmen, einen elektrischen Steckverbinder und einen Reiter des Adapters in jeweils perspektivischen Ansichten zeigt;
- Fig. 4: eine Explosionsdarstellung, welche einen Schieberiegel zum Sichern des Adapters am Wischarm, den Wischarm, einen Wasserstecker und einen elektrischen Anschluss in perspektivischen Ansichten zeigt;
- Fig. 5: eine geschnittene Ansicht des Schieberiegels gemäß Fig. 4;
- Fig. 6: den mit dem elektrischen Anschluss gekoppelten Wasserstecker gemäß Fig. 4 in einer Perspektivansicht;
- Fig. 7: den mit dem elektrischen Anschluss gekoppelten Wasserstecker gemäß Fig. 4 in einer Seitenansicht;
- Fig. 8: in einer Seitenansicht den Wischarm mit nach hinten in seine Funktionsstellung geschobenem Schieberiegel, welcher den Adapter an einem Sich-Lösen von dem Wischarm hindert;
- Fig. 9: den Wischarm mit nach vorne in eine Demontagestellung verschobenem Schieberiegel und die von dem Wischarm nach unten abgezogene Wischblattanordnung, welche den Adapter und das durch diesen gehaltene Wischblatt umfasst;
- Fig. 10: eine Ausgestaltung des Wassersteckers, bei welcher in Wasserleitungen desselben elektrische Heizleiter verlegt sind;
- Fig. 11: eine Ausgestaltung des Adapters, welcher vertauschsicher an dem zugehörigen Wischarm montierbar ist in einer Ansicht von einer ersten Seite;
- Fig. 12: den Adapter und den Wischarm gemäß Fig. 11 in einer Perspektivansicht von der gegenüberliegenden Seite.

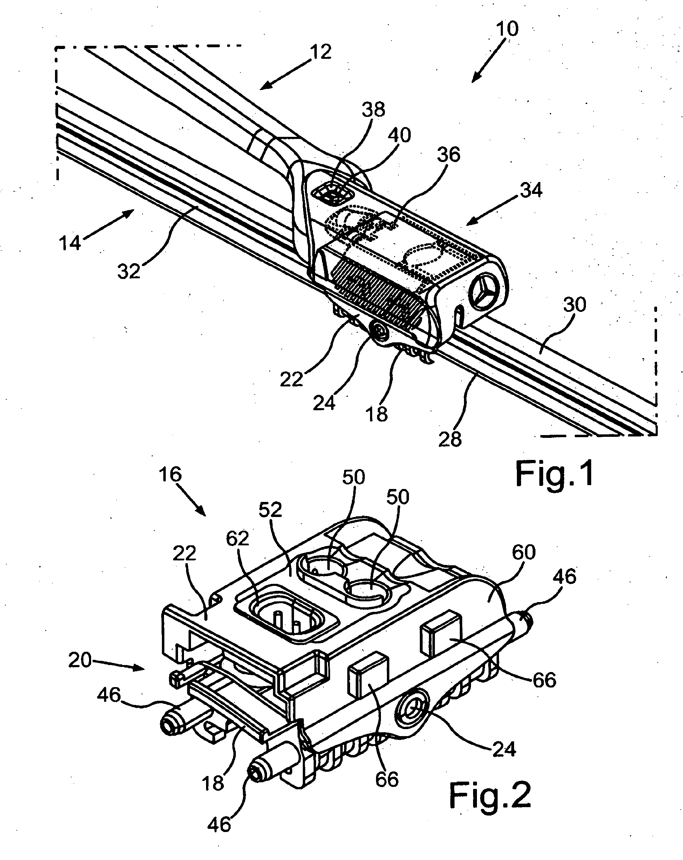

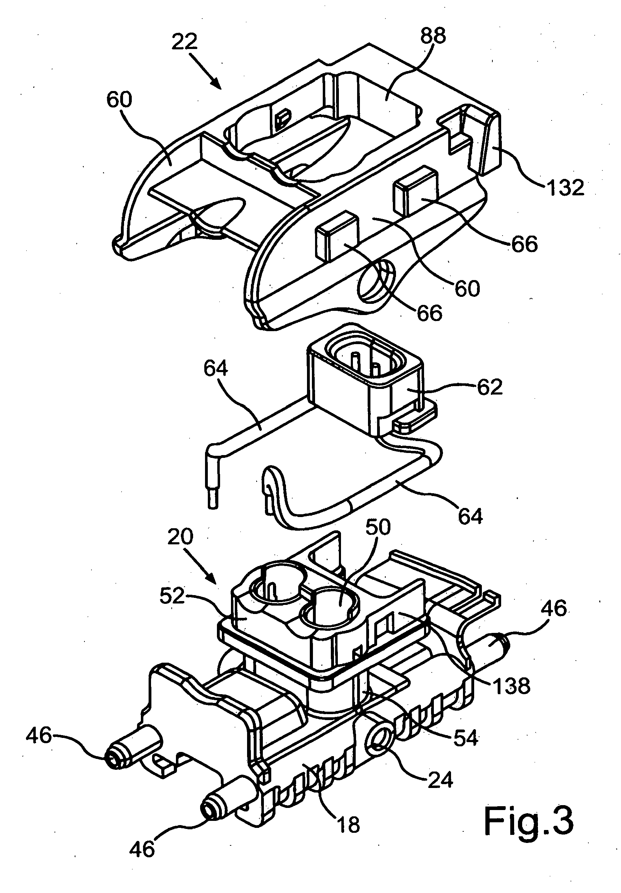

Fig. 1 zeigt eine Verbindungsanordnung 10 einer Scheibenwischanlage eines Fahrzeugs, wobei ein Wischarm 12 mit einem wasserführenden Wischblatt 14 gekoppelt ist. Das Wischblatt 14 ist mittels eines Adapters 16 (vgl. Fig. 2) an dem Wischarm 12 gehalten, wobei von dem Adapter 16 in Fig. 1 lediglich ein Unterteil 18 eines Reiters 20 (vgl. Fig. 3) sowie ein Stück eines Führungsrahmens 22 zu sehen sind, welcher auf einer an dem Unterteil 18 ausgebildeten Drehachse 24 drehbar gelagert ist.

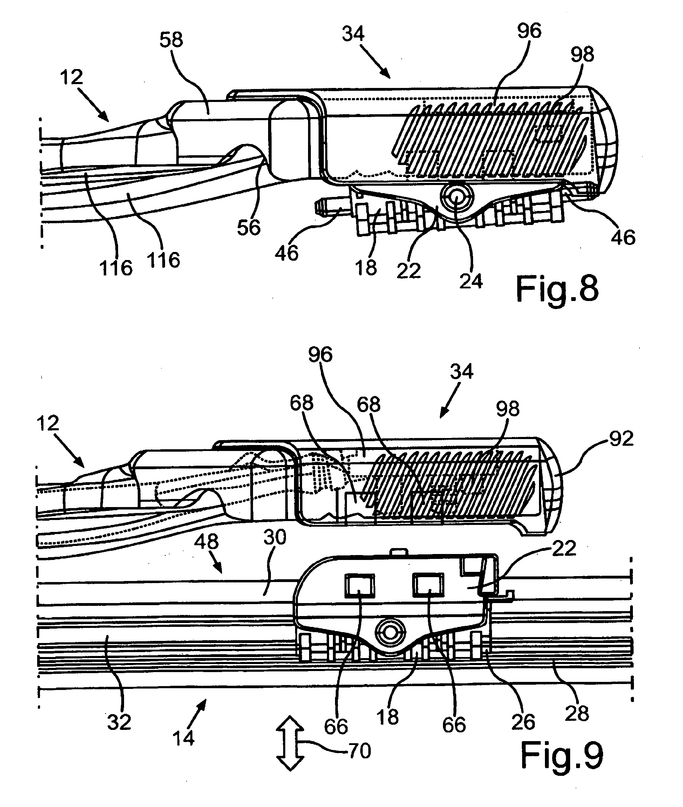

Das Unterteil 18 des Reiters 20 hält eine Federschiene 26 (vgl. Fig. 9) und einen Wischgummi 28 des Wischblatts 14. Das Wischblatt 14 umfasst des Weiteren einen Spoiler 30 sowie Leitungen 32 für Waschflüssigkeit. Die Waschflüssigkeit kann vom Wischarm 12 her kommend über (nicht gezeigte) Auslässe aus den beiden im Wischblatt 14 verlegten Leitungen 32 austreten.

Ein Schiebriegel 34, welcher an den Wischarm 12 vormontiert ist, ist in Fig. 1 in eine Funktionsstellung, und zwar vorliegend in Längserstreckungsrichtung des Wischarms 12 nach hinten, also in Fig. 1 nach links verschoben. In dieser Funktionsstellung hindert der Schieberiegel 34 den Adapter 16 und somit das Wischblatt 14 an einem Sich-Lösen von dem Wischarm 12.

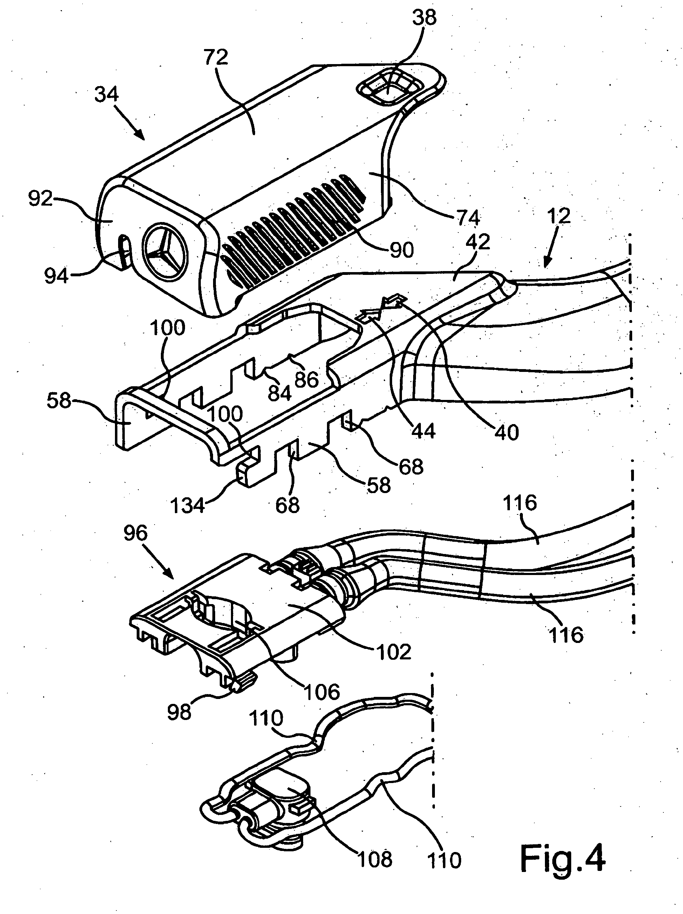

In einem Rücken 36 des Schieberiegels 34 ist eine Öffnung 38 vorgesehen, welche einer Bedienperson einen Blick auf ein Symbol 40 ermöglicht, welches auf einem Rücken 42 des Wischarms 12 angebracht ist (vgl. Fig. 4). Das Symbol 40, welches anzeigt, in welche Richtung der Schieberiegel 34 entlang des Wischarms 12 verschoben werden kann, ist vorliegend als Pfeilsymbol ausgebildet. Wird der Schieberiegel 34 nach vorne in seine das Montieren oder das Demontieren des Adapters 16 ermöglichende Montagestellung geschoben (vgl. Fig. 9), so befindet sich die Öffnung 38 im Rücken 36 des Schieberiegels 34 auf der Höhe eines zweiten Symbols 44 auf dem Rücken 42 des Wischarms 12, welches vorliegend ebenfalls als Pfeilsymbol ausgebildet ist, jedoch in die entgegengesetzte Richtung zeigt (vgl. Fig. 4). In alternativen Ausführungsformen können andere Anzeigen vorgesehen sein, welche einer Bedienperson ein Verbrachtsein des Schieberiegels 34 in die Funktionsstellung beziehungsweise in die Montagestellung optisch veranschaulichen.

Insbesondere aus Fig. 2 geht hervor, dass das Unterteil 18 des Reiters 20 vier Anschlussstutzen 46 umfasst, welche in einer das Wischblatt 14 und den Adapter 16 umfassenden Wischblattanordnung 48 (vgl. Fig. 9) mit den die Waschflüssigkeit auf die Scheibe des Fahrzeugs aufbringenden Leitungen 32 gekoppelt sind. In den Adapter 16 wird die vom Wischarm 12 kommende Waschflüssigkeit über zwei Kanalstücke 50 eingebracht, deren oberseitige Öffnungen im Bereich eines Oberteils 52 des Reiters 16 angeordnet sind. Vom Oberteil 52 kommend treten die beiden einander parallelen Kanalstücke 50 durch ein Mittelteil 54 des Reiters 20 hindurch (vgl. Fig. 3). Im Unterteil 18 des Reiters 20 verzweigen sich die beiden Kanalstücke 50 zu den in senkrechter Richtung von diesen abgehenden Anschlussstutzen 46 hin.

Das in der Explosionsdarstellung in Fig. 3 nicht durch den Führungsrahmen 22 verdeckte Mittelteil 54 ist flexibel und elastisch ausgebildet, während das Oberteil 52 und das Unterteil 18 des Reiters 20 starr sind. Auf diese Weise ermöglicht der Adapter 16 eine Relativbewegung des Wischblatts 14 relativ zu dem Wischarm 12 und zwar in einer Ebene, welche senkrecht zu der Drehachse 24 verläuft und welche mit der Längserstreckungsrichtung des Wischblatts 14 zusammenfällt.

Fig. 8 zeigt eine Auslenkung des Unterteils 18 gegenüber dem Wischarm 12, bei welcher ein vorderer Bereich des Wischblatts 14 im Bezug zur Horizontalen maximal weit nach oben und ein hinterer Bereich des Wischblatts 14 maximal weit nach unten verschwenkt ist. Die Abweichung des sich gegenüber dem Wischarm 12 während des Wischbetriebs bewegenden Wischblatts 14 von der Horizontalen beträgt etwa + / - 3°. Diese Schwenkbewegung des Wischblatts 14 gegenüber dem Wischarm 12 ermöglicht es, dass sich das Wischblatt 14 beim Wischen der in der Regel sphärisch gekrümmten Scheibe dem Verlauf der Scheibenoberfläche anpassen kann. Bei der Relativbewegung des Wischblatts 14 gegenüber dem Wischarm 12 gemäß Fig. 8, bei welcher das von dem Unterteil 18 des Reiters 20 gehaltene (nicht gezeigte) Wischblatt 14 verschwenkt wird, kommt der Spoiler 30 des Wischblatts 14 in einer Aussparung 56 zu liegen, welche in einem Schenkel 58 des Wischarms 12 ausgebildet ist (Fig. 8).

Wie Fig. 2 zeigt, ist das Oberteil 52 des Reiters 16 von dem Führungsrahmen 22 eingefasst. Entsprechend sind im mit dem Führungsrahmen 22 verbundenen Zustand des Reiters 20 Außenseiten 138 des Oberteils 52 mit Innenseiten einer Ausnehmung 88 im Führungsrahmen 22 in Anlage (vgl. Fig. 3).

Seitenwände 60 des Führungsrahmens 22 liegen im mit dem Wischarm 12 verbundenen Zustand des Adapters 16 an den Innenseiten der beiden Schenkel 58 des Wischarms 12 an (vgl. Fig. 3 und Fig. 4). Dadurch, dass die Seitenwände 60 des Führungsrahmens 22 nicht nur das Oberteil 52 nach Art eines Käfigs umschließen, sondern Aussparungen in den Seitenwänden 60 auf der an dem Unterteil 18 ausgebildete Drehachse 24 drehbar gelagert sind, erfolgt eine Kraftübertragung vom Wischarm 12 über den Führungsrahmen 22 auf das Unterteil 18, ohne das hierdurch die Beweglichkeit des Unterteils 18 gegenüber dem Oberteil 52 des Reiters 20 eingeschränkt wäre.

Dass diese Beweglichkeit des Unterteils 18 gegenüber dem Oberteil 52 sicherstellende Mittelteil 54 (vgl. Fig. 3) kann, insbesondere in einem Zweikomponenten-Spritzgießverfahren bei der Herstellung des Reiters 20, aus einem Kunststoff gebildet sein, welcher eine größere Elastizität aufweist, als ein für das Unterteil 18 und für das Oberteil 52 verwendeter, vergleichsweise starrer Kunststoff.

Bei der vorliegend beispielhaft gezeigten Ausführungsform des Adapters 16 ist dieser nicht nur zum Einbringen von Waschflüssigkeit in das Wischblatt 16 ausgebildet, sondern auch zum Einbringen von elektrischer Heizenergie. Hierfür ist in dem Adapter 16 ein elektrischer Steckverbinder 62 vorgesehen (vgl. Fig. 2), welcher zusammen mit zwei von diesem abgehenden elektrischen Leitungen 64 in Fig. 3 als Einzelteil gezeigt ist. Fig. 3 zeigt in Zusammenschau mit Fig. 2 des Weiteren, dass die in dem Führungsrahmen 22 vorgesehene Ausnehmung 88 sowohl zum Aufnehmen des Oberteils 52 als auch des Steckverbinders 62 ausgelegt ist.

Fig. 2 zeigt des Weiteren, dass an den Seitenwänden 60 des Führungsrahmens 22 zwei Vorsprünge in Form von zwei Riegelwarzen 66 je Seitenwand 60 vorgesehen sind. Wenn der Adapter 16 von unten in den im Querschnitt ein U-Profil aufweisenden Endbereich des Wischarms 12 eingeschoben wird (vgl. Fig. 9), so werden die Riegelwarzen 66 in korrespondierende, nach unten offene Ausnehmungen 68 eingebracht, welche in den Schenkeln 58 des Wischarms 12 in dessen Endbereich vorgesehen sind (vgl. Fig. 4).

Sind die vier Riegelwarzen 66 in die zugehörigen Ausnehmungen 68 eingebracht und befinden sich zusätzlich die Seitenwände 60 des Führungsrahmens 22 in Anlage mit den Innenseiten der Schenkel 58, so ist der Adapter 16 sowohl in Längserstreckungsrichtung des Wischarms 12 als auch in Richtung der Wischbewegung des Wischarms 12 lagegesichert im Endbereich des Wischarms 12 aufgenommen. Der Schieberiegel 34 sichert den Adapter 16 zusätzlich gegen ein Sich-Lösen in die Montagerichtung welche einer Demontagerichtung gleich und in Fig. 9 durch einen Bewegungspfeil 70 veranschaulicht ist.

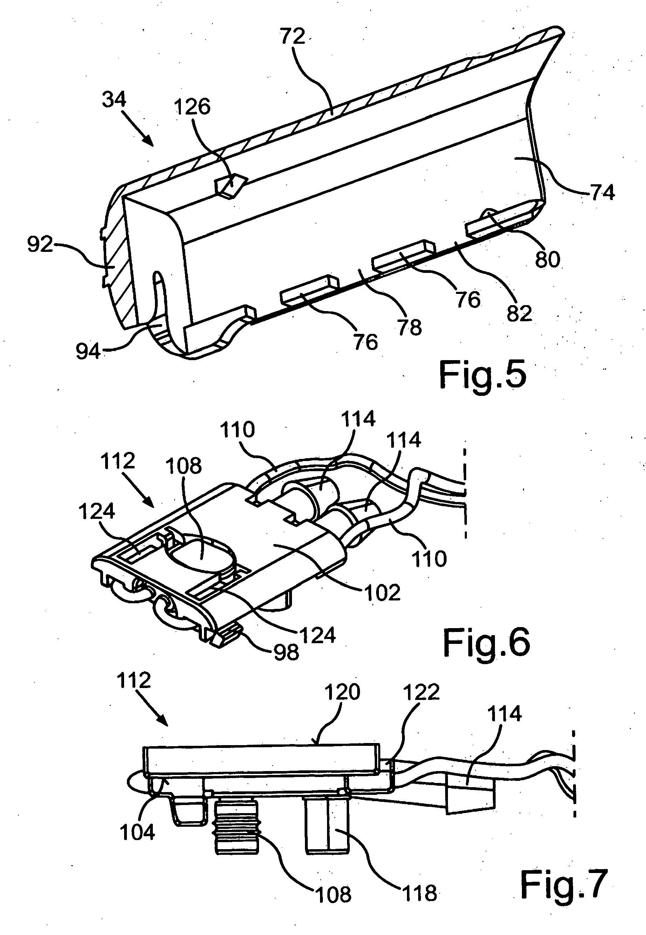

Der Schieberiegel 34 weist einen Rücken 72 und zwei Schenkel 74 (vgl. Fig. 4). Wie aus Fig. 5 hervorgeht, sind an den Innenseiten der Schenkel 74 jeweils zwei Leisten 76 angeordnet, welche nach innen von diesen vorstehen. Wenn der Schieberiegel 34 aus seiner in Fig. 9 gezeigten und ein Montieren beziehungsweise ein Demontieren der Wischblattanordnung 48 ermöglichenden Montagestellung in seine den Adapter 16 sichernde Funktionsstellung nach hinten geschoben ist (vgl. Fig. 8), so verriegeln die Leisten 76 die in den Schenkeln 58 des Wischarms 12 ausgebildeten und nach unten offenen Ausnehmungen 68, in welchen sich die Riegelwarzen 66 des Führungsrahmens 22 befinden. Zudem untergreifen die Leisten 76 die Schenkel 58 des Wischarms 12 unterseitig und dienen so als Aufschlagschutz, wenn der kein Wischblatt 14 haltende Wischarm 12 auf die Scheibe aufschlagen sollte.

In der Montagestellung des Schieberiegels 34 ermöglichen ein zwischen den beiden Leisten 76 angeordneter Bereich 78 sowie ein zwischen der hinteren Leiste 76 und einer Rastnase 80 des Schieberiegels 34 angeordneter Bereich 82 (vgl. Fig. 5), dass die Riegelwarzen 66 ungehindert in die Ausnehmungen 68 in den Schenkeln 58 des Wischarms 12 eingeführt werden können.

Wie insbesondere Fig. 4 zeigt, sind in den beiden Schenkeln 58 des Endbereichs des Wischarms 12 jeweils eine vordere Rastkerbe 84 und eine hintere Rastkerbe 86 vorgesehen. Befindet sich der Schieberiegel 34 in der in Fig. 9 gezeigten Montagestellung, so ist die an der Innenseite des Schenkels 74 des Schieberiegels 34 angeordnete Rastnase 80 (vgl. Fig. 5) mit der vorderen Rastkerbe 84 in Eingriff. In der den Adapter sichernden Funktionsstellung des Schieberiegels 34 ist hingegen die Rastnase 80 mit der hinteren Rastkerbe 86 in Eingriff.

Das Einrasten der Rastnase 80 in die jeweilige Rastkerbe 84, 86 ist für die Bedienperson deutlich hörbar und spürbar, also haptisch erfassbar. Zudem kann anhand des durch die Öffnung 38 im Rücken 72 des Schieberiegels 34 freigegebenen Symbols 40, 44 im Rücken 42 des Wischarms 12 optisch festgestellt werden, ob der Schieberiegel 34 die Montagestellung oder die Funktionsstellung erreicht hat.

Zur besseren Handhabung des Schieberiegels beim Verschieben entlang des Wischarms 12 können die Schenkel 74 an ihrer Außenseite eine Riffelung 90 aufweisen (vgl. Fig. 4). Fig. 4 zeigt des Weiteren, dass der Schieberiegel 34 eine vordere Stirnwand 92 umfasst, welche bei nach hinten geschobenen Schieberiegel den nach vorne hin offenen Endbereich des Wischarms 12 optisch ansprechend abschließt und so auch den in dem Endbereich des Wischarms 12 aufgenommen Adapter 16 schützt.

In der Stirnwand 92 ist eine Kerbe 94 vorgesehen, welche beim Verschwenken des Wischblatts 14 gegenüber dem Wischarm 12 in die in Fig. 8 gezeigte Stellung den Spoiler 30 des Wischblatts 14 aufnimmt.

Fig. 4 zeigt zudem einen Wasserstecker 96, welcher am Wischarm 12 vormontiert ist, und über welchen die Waschflüssigkeit in die Kanalstücke 50 in dem Adapter 16 eingebracht wird (vgl. Fig. 2). Der Wasserstecker 96 ist in seinem am Endbereich des Wischarms 12 befestigten Zustand mit dem Wischarm 12 verrastet. Hierbei greifen zwei Rastnasen 98 des Wassersteckers 96 in korrespondierende Ausnehmungen 100 ein, welche in den Schenkeln 58 des Endbereichs des Wischarms 12 vorgesehen sind. Zudem liegen zwei Seitenkanten eines plattenförmigen Grundkörpers 102 des Wassersteckers 96 mit ihrer Unterseite 104 (vgl. Fig. 7) oben auf den Schenkeln 58 des in diesem Teil des Endbereichs nach oben hin offenen Wischarms 12 auf, wenn der Wasserstecker 96 mit dem Wischarm 12 verrastet ist.

Der Wasserstecker 96 weist vorliegend im Grundkörper eine Öffnung 106 auf, welche zum Aufnehmen eines elektrischen Anschlusses 108 ausgebildet ist. Der elektrische Anschluss 108 ist über zwei Kabel 110, welche im Wischarm 12 verlegt sind, mit elektrischer Energie versorgbar. Die elektrisch Energie kann in Form von Heizenergie nach dem Einstecken des Steckverbinders 62 des Adapters 16 in den elektrischen Anschluss 108 in die Waschflüssigkeit eingebracht werden.

Fig. 6 zeigt den mit dem elektrischen Anschluss 108 gekoppelten Wasserstecker 96, welcher somit als Kombistecker 112 ausgebildet ist. Einstückig mit dem plattenförmigen Grundkörper 102 ausgebildete Anschlussstutzen 114 dienen dem Anschließen von zwei Schlauchleitungen 116 (vgl. Fig. 4) an den Kombistecker 112. Die Schlauchleitungen 116 sind ebenso wie die Kabel 110 im Wischarm verlegt. Ein von den jeweiligen Anschlussstutzen 114 senkrecht nach unten abstehendes Leitungsstück 118 wird beim Verbinden des Adapters 16 mit dem Wischarm 12 in das jeweils korrespondierende Kanalstück 50 eingeführt, welches durch den Reiter 20 hindurchgeführt ist (vgl. Fig. 3).

Eine Oberfläche 120 des Grundkörpers 102 schließt im mit dem Wischarm 12 verbundenen Zustand des Kombisteckers 112 in der Höhe bündig mit dem Rücken 42 des Wischarms 12 ab. Ein an dem Grundkörper 102 vorgesehener Anschlag 122 (vgl. Fig. 7) untergreift hierbei den Rücken 42 des Wischarms 12. Zudem sind in dem Grundkörper 102 des Kombisteckers 112 zwei nach oben offene Vertiefungen 124 vorgesehen (vgl. Fig. 6), in welche jeweils eine Rastnase 126 eingreift, welche vom Rücken 72 des Schieberiegels 34 nach unten vorsteht (vgl. Fig. 5).

Fig. 8 zeigt den Schieberiegel 34 in seiner Funktionsstellung, in welcher die Stirnwand 92 des Schieberiegels 34 am vorderen Ende des Wischarms 12 anliegt.

In der in Fig. 9 gezeigten Montagestellung des Schieberiegels 34 ist dieser nach vorne gezogen, und die Stirnwand 92 ist vom vorderen Ende des Wischarms 12 beabstandet. Entsprechend versperren die Leisten 76 (vgl. Fig. 5) nicht die nach unten offenen Ausnehmungen 68 in den Schenkeln 58 im Endbereich des Wischarms 12. Die Riegelwarzen 66 am Führungsrahmen 22 des Adapters 16 können ungehindert in diese Ausnehmungen 68 eingebracht werden, wenn die Wischblattanordnung 48 an dem Wischarm 12 befestigt werden soll. Beim Demontieren kann die Wischblattanordnung 48 entsprechend nach unten abgezogen werden (vgl. Bewegungspfeil 70), wenn sich der Schieberiegel 34 in der in Fig. 9 gezeigten Montagestellung befindet.

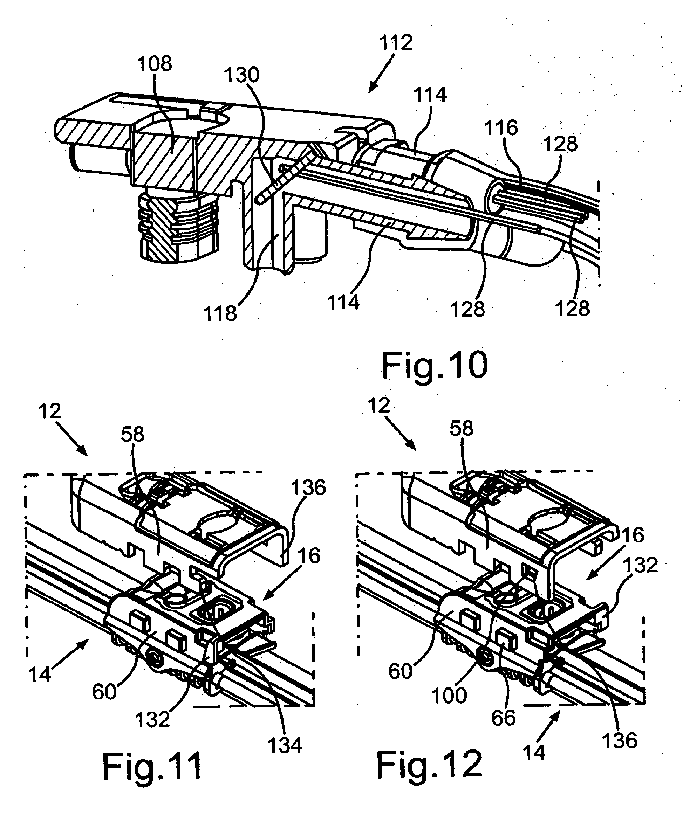

Fig. 10 zeigt eine alternative Ausbildung des Kombisteckers 112, bei welchem auch innerhalb der Anschlussstutzen 114 jeweils ein elektrischer Heizleiter 128 verlegt ist. Der Heizleiter 128 bildet eine Schlinge, welche um einen Sicherungsstift 130 herumgeführt ist, wobei der Sicherungsstift 130 am Übergang des Anschlussstutzens 114 zu dem Leitungsstück 118 angeordnet ist. Von dem Sicherungsstift 130 aus verläuft der Heizleiter 128 somit zweisträngig durch die jeweilige Schlauchleitung 116. Derartige Heizleiter 128 ermöglichen das Beheizen der Waschflüssigkeit bereits beim Durchströmen der im Wischarm 12 verlegten Schlauchleitungen 116.

Fig. 11 zeigt in Zusammenschau mit Fig. 12, wie durch Vorsehen von miteinander korrespondierenden Führungen an dem Wischarm 12 und an dem Adapter 16 sichergestellt werden kann, dass nur das zu dem Wischarm 12 zugehörige Wischblatt 14 an diesen montiert wird.

So ist bei dem Adapter 16 an einer der Seitenwände 60 des Führungsrahmens 22 eine nach oben hin leicht schräg zulaufende Führungsnase 132 vorgesehen (vgl. Fig. 11). Diese Führungsnase 132 reicht bis zur Oberseite des Adapters 16. Auf Seiten des Wischarms 12 ist im Bereich des linken Schenkels 58 ebenfalls eine Führung 134 vorgesehen, welche eine Einführschräge aufweist. Entlang dieser Führung 134 gleitet die Führungsnase 132 nach oben, wenn der Adapter 16 von unten her in den Endbereich des Wischarms 12 eingeführt wird.

An der gegenüberliegenden Seitenwand 60 des Adapters 16 ist keine Führungsnase vorgesehen, sodass ein die Ausnehmung 100 umschließendes Wandstück 136 des auf dieser Seite des Wischarms 12 angeordneten Schenkels 58 ungehindert an der vorderen Riegelwarze 66 vorbeibewegt werden kann, wenn der Adapter 16 von unten in den Endbereich des Wischarms 12 eingeführt wird (vgl. Fig. 12).

Durch die miteinander korrespondierende Ausgestaltung des Wischarms 12 in seinem die Führung 134 bzw. das Wandstück 136 aufweisenden Endbereich und des die Führungsnase 132 an lediglich einer Seite aufweisenden Adapters 16 kann ein Vertauschschutz sichergestellt werden. So kann etwa dafür gesorgt werden, dass ein beifahrerseitiges Wischblatt 14 nur am beifahrerseitigen Wischarm 12 und ein fahrerseitiges Wischblatt 14 nur am fahrerseitigen Wischarm 12 montiert werden kann. Ebenso kann ein Vertauschschutz für einen Frontscheibenwischer oder einen Heckscheibenwischer auf diese Weise sichergestellt werden.

## Patentansprüche

1. Wischblattanordnung mit einem ein Wischblatt (14) haltenden Anbindungselement (16), welches an einem Wischarm (12) einer Scheibenwischanlage eines Fahrzeugs festleg bar ist, wobei über das Anbindungselement (16) das Wischblatt (14) mit wenigstens einem Kanal (114) für Waschflüssigkeit koppelbar ist, welche vom Wischarm (12) her in das Anbindungselement (16) einbringbar ist, und wobei das Anbindungselement (16) eine Relativbewegung des Wischblatts (14) gegenüber dem Wischarm (12) zulässt,
wobei
das Anbindungselement (16) einen zum Halten einer Federschiene (28) des Wischblatts (14) ausgebildeten Reiter (20) aufweist, **dadurch gekennzeichnet, dass** der Reiter ein wischarmseitiges Oberteil (52) und ein wischblattseitiges Unterteil (18) umfasst, welche über ein wenigstens eine Leitung (50) für die Waschflüssigkeit umschließendes Mittelteil (54) des Reiters (20) miteinander verbunden sind, wobei das Mittelteil (54) eine größere Elastizität aufweist als das Oberteil (52) und das Unterteil (18) des Reiters (20).

2. Wischblattanordnung nach Anspruch 1,
**dadurch gekennzeichnet, dass**
das Anbindungselement (16) über ein Rahmenelement (22) an dem Wischarm (12) festlegbar ist, welches mit zumindest zwei einander gegenüberliegenden Außenseiten (138) des Oberteils (52) in Anlage ist.

3. Wischblattanordnung nach Anspruch 2,
**dadurch gekennzeichnet, dass**
das Rahmenelement (22) auf einer an dem Unterteil (18) ausgebildeten Drehachse (24) gelagert ist.

4. Wischblattanordnung nach einem der Ansprüche 1 bis 3,
**dadurch gekennzeichnet, dass**
das Anbindungselement (16) an den Wischarm (12) in eine Montagerichtung (70) montierbar ist, welche quer zu einer durch die Wischbewegung des Wischblatts (14) definierbaren Wischfläche verläuft.

5. Wischblattanordnung nach Anspruch 4,
**dadurch gekennzeichnet, dass**
das Anbindungselement (16)
- wenigstens einen über eine Seitenwand (60) desselben vorstehenden Vorsprung (66) aufweist, welcher beim Montieren an den Wischarm (12) in eine in die Montagerichtung (70) offene Ausnehmung (68) am Wischarm (12) einbringbar ist und/oder
- wenigstens ein, insbesondere an nur einer Seitenwand (60) desselben angeordnetes, Führungselement (132) aufweist, welches beim Montieren an den Wischarm (12) an einem wischarmseitigen, insbesondere eine Einführschräge aufweisenden, Führungselement (134) geführt ist.

6. Wischblattanordnung nach einem der Ansprüche 1 bis 5,
**dadurch gekennzeichnet, dass**
das Anbindungselement (16) wenigstens einen, insbesondere mit einem wischblattseitigen elektrischen Heizleiter gekoppelten, elektrischen Steckverbinder (62) aufweist, welcher beim Anbringen des Anbindungselements (16) an dem Wischarm (12) mit einem wischarmseitigen elektrischen Anschluss (108) verbindbar ist.

7. Verbindungsanordnung mit einer Wischblattanordnung (48) nach einem der Ansprüche 1 bis 6 und mit einem Wischarm (12) einer Scheibenwischanlage eines Fahrzeugs,
wobei
zum lagegesicherten Halten des Anbindungselements (16) an dem Wischarm (12) ein an dem Wischarm (12) angeordneter Schieber (34) vorgesehen ist, welcher entlang des Wischarms (12) aus einer Montagestellung in eine das Anbindungselement (16) sichernde Funktionsstellung verschiebbar ist.

8. Verbindungsanordnung nach Anspruch 7,
**dadurch gekennzeichnet, dass**
an dem Wischarm (12) wenigstens eine Anzeige (40, 44) vorgesehen ist, mittels welcher ein Verbrachtsein des Schiebers (34) in die Funktionsstellung und/oder in die Montagestellung einer Bedienperson anzeigbar ist.

9. Verbindungsanordnung nach Anspruch 7 oder 8,
**dadurch gekennzeichnet, dass**
der Wischarm (12) wenigstens eine Rastkerbe (84, 86) aufweist, welche in der Funktionsstellung und/oder in der Montagestellung des Schiebers (34) mit einer an dem Schieber (34) angeordneten Rastnase (80) in Eingriff ist.

10. Verbindungsanordnung nach einem der Ansprüche 7 bis 9,
**dadurch gekennzeichnet, dass**
der Schieber (34) einen Rücken (72) und zwei Schenkel (74) aufweist, wobei an den Schenkeln (72) des Schiebers (74) wenigstens ein den Wischarm (12) unterseitig umgreifender und/oder das Anbindungselement (16) in der Funktionsstellung des Schiebers (34) sichernder Vorsprung (76) angeordnet ist.

## Claims

1. Wiper blade assembly, comprising a joining element (16), which holds a wiper blade (14) and can be secured to a wiper arm (12) of a windscreen wiper system of a vehicle, wherein the wiper blade (14) can be coupled via the joining element (16) to at least one passage (114) for washer fluid which can be introduced from the wiper arm (12) into the joining element (16), and wherein the joining element (16) allows a relative movement of the wiper blade (14) against the wiper arm (12), the joining element (16) comprising a slider (20) designed for holding a resilient bar (28) of the wiper blade (14),
**characterised in that**
the slider comprises a wiper arm-side upper part (52) and a wiper blade-side lower part (18), which are connected to one another via a central part (54) of the slider (20), which encloses at least one line (50) for the washer fluid, the central part (54) having a greater elasticity than the upper part (52) and the lower part (18) of the slider (20).

2. Wiper blade assembly according to claim 1,
**characterised in that**
the joining element (16) can be located on the wiper arm (12) via a frame element (22), which is in contact with at least two opposite outsides (138) of the upper part (52).

3. Wiper blade assembly according to claim 2,
**characterised in that**
the frame element (22) is bearing-mounted on an axis of rotation (24) formed on the lower part (18).

4. Wiper blade assembly according to any of claims 1 to 3,
**characterised in that**
the joining element (16) can be mounted on the wiper arm (12) in a mounting direction (70), which extends at right angles to a wiping surface which can be defined by the wiping movement of the wiper blade (14).

5. Wiper blade assembly according to claim 4,
**characterised in that**
the joining element (16) comprises
- at least one projection (66), which projects beyond a side wall (60) thereof and which can be inserted into a recess (68) in the wiper arm (12) which is open in the mounting direction (70) while the joining element (16) is being mounted on the wiper arm (12), and/or
- at least one guide element (132), which is in particular located on only one side wall (60) thereof and which is guided on a wiper arm-side guide element (134) having an insertion bevel in particular while the joining element (16) is being mounted on the wiper arm (12).

6. Wiper blade assembly according to any of claims 1 to 5,
**characterised in that**
the joining element (16) comprises at least one electric plug connector (62), which is in particular coupled to a wiper blade-side electric heating conductor and which can be connected to a wiper arm-side electric connection (108) while the joining element (16) is being mounted on the wiper arm (12).

7. Connecting assembly comprising a wiper blade assembly (48) according to any of claims 1 to 6 and a wiper arm (12) of a windscreen wiper system of a motor vehicle,
wherein
for the positionally secure location of the joining element (16) on the wiper arm (12), a slide (34) located on the wiper arm (12) is provided, which can be moved along the wiper arm (12) from a mounting position into a functional position securing the joining element (16).

8. Connecting assembly according to claim 7,
**characterised in that**
at least one indication (40, 44), by means of which an operator can be informed whether the slide (34) has been moved into the functional position and/or into the mounting position, is provided on the wiper arm (12).

9. Connecting assembly according to claim 7 or 8,
**characterised in that**
the wiper arm (12) has at least one latching notch (84, 86), which is in engagement with a latching lug (80) located on the slide (34) in the functional position and/or in the mounting position of the slide (34).

10. Connecting assembly according to any of claims 7 to 9,
**characterised in that**
the slide (34) has a back (72) and two legs (74), wherein at least one projection (76) encompassing the wiper arm (12) on the underside and/or securing the joining element (16) in the functional position of the slide (34) is located on the legs (74) of the slide (34).

## Revendications

1. Ensemble balai d'essuie-glace présentant un élément d'assemblage (16) qui retient un balai d'essuie-glace (14) et qui peut être fixé sur un bras d'essuie-glace d'un système d'essuie-glace de véhicule, le balai d'essuie-glace (14) pouvant être accouplé à au moins un canal de liquide de lavage par l'intermédiaire de l'élément d'assemblage (16), le liquide de lavage pouvant être introduit dans l'élément d'assemblage (16) à partir du bras d'essuie-glace et l'élément d'assemblage (16) permet un mouvement relatif du balai d'essuie-glace (14) par rapport au bras d'essuie-glace, l'élément d'assemblage (16) comportant un curseur (20) conçu de manière à retenir un rail élastique (26) du balai d'essuie-glace (14), **caractérisé en ce que** ledit curseur comprend une partie supérieure (52) côté bras d'essuie-glace et une partie inférieure (18) côté balai d'essuie-glace, lesquelles sont reliées l'une à l'autre par l'intermédiaire d'un élément central (54) du curseur (20) entourant au moins une conduite (50) pour le liquide de lavage, l'élément central (54) présentant une élasticité supérieure à celle de la partie supérieure (52) et de la partie inférieure (18) du curseur (20).

2. Ensemble balai d'essuie-glace selon la revendication 1, **caractérisé en ce que** l'élément d'assemblage (16) peut être fixé par l'intermédiaire d'un élément de cadre (22) au bras d'essuie-glace (12), qui vient en butée avec au moins deux faces extérieures (138) se faisant face de la partie supérieure (52).

3. Ensemble balai d'essuie-glace selon la revendication 2, **caractérisé en ce que** l'élément de cadre est monté sur un axe de rotation (24) formé sur la partie inférieure (18).

4. Ensemble balai d'essuie-glace selon l'une quelconque des revendications 1 à 3, **caractérisé en ce que** l'élément d'assemblage (16) peut être monté sur le bras d'essuie-glace (12) dans une direction de montage (70) qui s'étend perpendiculairement à une surface de balayage pouvant être définie par le mouvement d'essuyage du balai d'essuie-glace (14).

5. Ensemble balai d'essuie-glace selon la revendication 4, **caractérisé en ce que** l'élément d'assemblage (16) présente au moins une saillie (66) faisant saillie d'une paroi latérale (60) de celui-ci, ladite saillie peut être introduite lors du montage sur le bras d'essuie-glace (12) dans un évidemment (68) sur le bras d"essuie-glace (12) dans la direction de montage (70) et/ou présente au moins un élément de guidage (132) disposé en particulier sur uniquement une paroi latérale (60) de celui-ci, ledit élément de guidage est guidé lors du montage sur le bras d'essuie-glace (12) sur un élément de guidage (134) côté bras d'essuie-glace, présentant notamment une inclinaison d'introduction.

6. Ensemble balai d'essuie-glace selon l'une quelconque des revendications 1 à 5, **caractérisé en ce que** l'élément d'assemblage (16) présente au moins un connecteur à fiche (62) électrique, couplé notamment à un conducteur thermique électrique côté balai d'essuie-glace, ledit connecteur à fiche peut être relié au moment de la pose de l'élément d'assemblage (16) sur le bras d'essuie-glace (12) à un raccordement électrique (108) côté bras d'essuie-glace.

7. Système d'assemblage comportant un système balai d'essuie-glace (48) selon l'une quelconque des revendications 1 à 6 et comportant un bras d'essuie-glace (12) d'un système d'essuie-glace d'un véhicule, afin de retenir l'élément d'assemblage (16) en position fixe sur le bras d'essuie-glace (12) est disposé sur le bras d'essuie-glace (12) un verrou (34) qui peut être poussé le long du bras d'essuie-glace (12) à partir d'une position de montage vers une position de fonctionnement permettant le blocage de l'élément d'assemblage (16).

8. Système d'assemblage selon la revendication 7, **caractérisé en ce que** le bras d'essuie-glace (12) présente au moins un affichage (40, 44) permettant indiquer à un utilisateur le passage du verrou (34) dans la position de fonctionnement et/ou dans la position de montage.

9. Système d'assemblage selon la revendication 7 ou la revendication 8, **caractérisé en ce que** le bras d'essuie-glace (12) présente au moins une encoche d'enclenchement (84, 86), dans laquelle dans la position de fonctionnement et/ou dans la position de montage du verrou (34) vient s'insérer un tenon d'enclenchement (80) disposé sur le verrou (34).

10. Système d'assemblage selon l'une quelconque des revendications 7 à 9, **caractérisé en ce que** le verrou (34) comprend une partie dorsale (76) et deux branches (74), sur les branches (72) du verrou (74) est disposée au moins une partie saillante (76) enveloppant le bras d'essuie-glace (12) sur sa face inférieure et/ou bloquant l'élément d'assemblage (16) dans la position de fonctionnement du verrou (34).
